# EUROPEAN PATENT APPLICATION

(11) **EP 2 530 539 A2**
(43) Date of publication of application: **05.12.2012**
(21) Application number: 12169924.3
(22) Date of filing: 30.05.2012
(51) Int. Cl.: G05B 19/042

(54) **Systems and methods to configure alerts for fieldbus foundation devices**

(30) Priority: 31.05.2011 US 201113149789
(71) Applicant: General Electric Company, Schenectady, NY 12345 (US)
(72) Inventor: Karaffa, John Michael, Salem, VA Virginia 24153-6422 (US); Downor Johnny Stephen, Salem, VA Virginia 24153-6422 (US); Smith, Stephen William, Salem, VA Virginia 24153-6422 (US)
(74) Representative: Picker, Madeline Margaret

(57) **Abstract**

In one embodiment, an industrial process control system (10) includes a field device (38, 44, 40, 42, 106) comprising a first plurality of parameters. The process control system (10) also includes a user interface (100) configured to provide for selection of the field device (38, 44, 40, 42, 106) and selection of an alert representation of the field device (38, 44, 40, 42, 106) to enable an alert of the field device (38, 44, 40, 42, 106). The process control system (10) also includes a controller (26) configured to set the first plurality of parameters of the field device (38, 44, 40, 42, 106) to a respective first plurality of values to enable the alert based on the selection of the alert representation in the user interface (100).

## Description

### BACKGROUND

The subject matter disclosed herein relates to industrial control systems, and, more specifically, to configuring alerts for industrial control systems.

Certain systems, such as industrial control systems, may provide for control capabilities that enable the execution of control instructions in various types of devices, such as sensors, pumps, valves, and the like. Additionally, certain industrial control systems may include one or more graphical user interfaces that may be used to present details to an operator about the various devices present on the control system network. For example, a graphical user interface may present an operator with device alerts that may contain alarm or diagnostic information about a device on the control system network.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one embodiment, an industrial process control system includes a field device comprising a first plurality of parameters. The process control system also includes a user interface configured to provide for selection of the field device and selection of an alert representation of the field device to enable an alert of the field device. The process control system also includes a controller configured to set the first plurality of parameters of the field device to a respective first plurality of values to enable the alert based on the selection of the alert representation in the user interface.

In another embodiment, a method includes receiving, from a user interface of a computer, a selection of a field device and a selection of an alert representation to enable or disable an alert of the field device. The method also includes determining a first plurality of parameters of the field device to be set to enable or disable the alert. The method also includes instructing a controller to assign to the field device a first plurality of values to the first plurality of parameters to enable or disable the alert.

In another embodiment, a method includes receiving, from a user interface of a computer, a selection of a field device and instructions to enable or disable a plurality of alerts for the field device. The method also includes determining a first plurality of parameters of the field device to be set to enable or disable the plurality of alerts. The method also includes instructing a controller to assign to the field device a first plurality of values to the first plurality of parameters to enable or disable the plurality of alerts.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system;
FIG. 2 is another schematic diagram of an embodiment of an industrial control system;
FIG. 3 illustrates an embodiment of a user interface for enabling and disabling alerts for a device in an industrial control system; and
FIG. 4 is a schematic diagram illustrating an embodiment of a process for enabling alerts for a device in an industrial control system; and
FIG. 5 is a schematic diagram illustrating an embodiment of a process for disabling alerts for a device in an industrial control system.
FIG. 6 illustrates an embodiment of a user interface for enabling and disabling individual alerts for a device in an industrial control system; and
FIG. 7 is a schematic diagram illustrating an embodiment of a process for enabling individual alerts for a device in an industrial control system; and
FIG. 8 is a schematic diagram illustrating an embodiment of a process for disabling individual alerts for a device in an industrial control system.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

For an industrial process control system, it may be desirable to enable or disable alerts for a particular device on the network with minimal operator input. However, for certain process control systems, such as systems utilizing the Fieldbus Foundation protocol, there may be a number of low-level device parameters that may be adjusted in order for the alerts to be enabled or disabled. Certain systems may require an operation to manually set all of these low level device parameters. Embodiments of the present technique include a system for enabling and disabling alerts at a high level with minimal user input. In particular, embodiments of the present technique allow alerts to be enabled or disabled at the both the device level and the individual alert level. Additionally, embodiments may include an alarm server that ensures that the low-level device parameters are properly adjusted to enable or disable alerts.

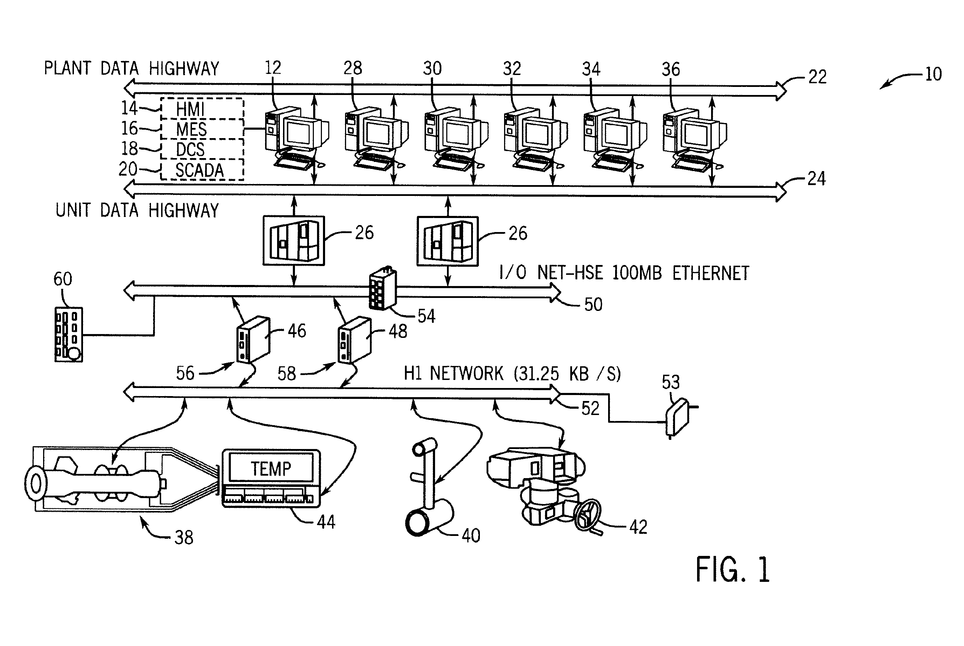

With the foregoing in mind, turning to FIG. 1, an embodiment of an industrial process control system 10 is depicted. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControlST™ software, available from General Electric Co., of Schenectady, New York.

Further, the computer 12 is communicatively connected to a plant data highway 22 suitable for enabling communication between the depicted computer 12 and other computers 12 in the plant. Indeed, the industrial control system 10 may include multiple computers 12 interconnected through the plant data highway 22. The computer 12 may be further communicatively connected to a unit data highway 24, suitable for communicatively coupling the computer 12 to industrial controllers 26. The system 10 may include other computers coupled to the plant data highway 22 and/or the unit data highway 24. For example, embodiments of the system 10 may include a computer 28 that executes a virtual controller, a computer 30 that hosts an Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. Other computers coupled to the plant data highway 22 and/or the unit data highway 24 may include computers hosting Cimplicity™, ControlST™, and ToolboxST™.

The system 10 may include any number and suitable configuration of industrial controllers 26. For example, in some embodiments the system 10 may include one industrial controller 26 or two, three, or more industrial controllers 26 for redundancy. The industrial controllers 26 may enable control logic useful in automating a variety of plant equipment, such as a turbine system 38, a valve 40, and a pump 42. Indeed, the industrial controller 26 may communicate with a variety of devices, including but not limited to temperature sensors 44, flow meters, pH sensors, temperature sensors, vibration sensors, clearance sensors (e.g., measuring distances between a rotating component and a stationary component), and pressure sensors. The industrial controller 26 may further communicate with electric actuators, switches (e.g., Hall switches, solenoid switches, relay switches, limit switches), and so forth.

In the depicted embodiment, the turbine system 38, the valve 40, the pump 42, and the temperature sensor 44 are communicatively interlinked to the automation controller 26 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as one of the industrial controllers 26, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controller 26 and to the computer 12. For example, the devices, such as the turbine system 38, the valve 40, the pump 42, and the temperature sensor 44, may include industrial devices, such as Fieldbus Foundation™ devices that include support for the Foundation H1 bi-directional communications protocol. In such an embodiment, a Fieldbus Foundation power supply 53, such as a Phoenix Contact Fieldbus Power Supply available from Phoenix Contact of Middletown, PA, may also be coupled to the H1 network 52 and may be coupled to a power source, such as AC or DC power. The devices 38, 40, 42, and 44 may also include support for other communication protocols, such as those included in the HART® Communications Foundation (HCF) protocol, and the Profibus Nutzer Organization e.V. (PNO) protocol.

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment an I/O pack 60 may be coupled to the I/O NET 50.

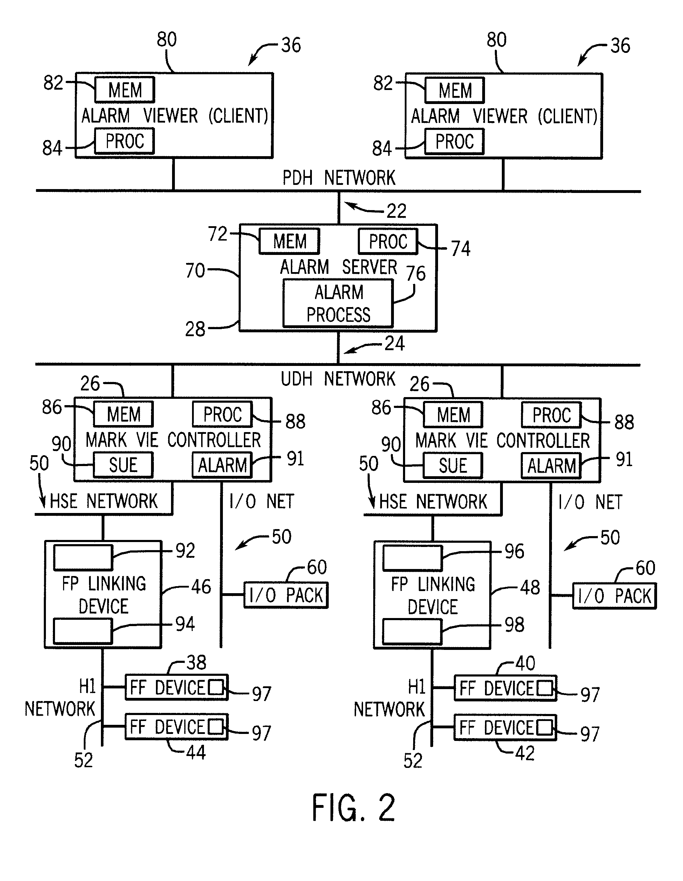

In certain embodiments, the devices 38, 40, 42, and 44 may provide data, such as alerts, to the system 10. These alerts may be handled in accordance with the embodiments described below. FIG. 2 depicts a block diagram of an embodiment of the system 10 depicting various components in further detail. As described above, the system 10 may include an alarm server 70, executed on the computer 28, coupled to the plant data highway 22 and the unit data highway 24. The computer 28 may include a memory 72, such as non-volatile memory and volatile memory, and a processor 74, to facilitate execution of the alarm server 70. The alarm server 70 may execute an alarm process 76 for receiving, processing, and responding to alarms received from the controllers 26.

The system 10 may include additional computers 36 coupled to the plant data highway 22 that may execute alarm viewers 80. The alarm viewers 80 may enable a user to view and interact with the alerts processed by the alarm server 70. The computers 36 may each include a memory 82 and a processor 84 for executing the alarm viewer 80. Additionally, in some embodiments, the alarm viewers 80 may be executed on the computer 28 or any of the computers described above in FIG. 1. The alarm server 70 may communicate with the alarm viewers 80 using any suitable alarm data protocol interpretable by the alarm viewers 80.

As described above, the controllers 26 are coupled to the unit data highway 24, and the controllers 26 may communicate with the alarm server 70 over the unit data highway 24. For example, in one embodiment, the controllers 26 and alarm server 70 may communicate using a serial data interface (SDI) alarm protocol. The controllers 26 may each include a memory 86 and a processor 88 for executing the functions of the controllers 26. In one embodiment, the controllers 26 may execute a sequence of events (SOE) process 90 and an alarm process 91. As mentioned above, the controllers 26 may be coupled to the I/O pack 60 over the I/O NET 50. In one embodiment, the I/O pack 60 may communicate with the controllers 26 using the ADL protocol.

As also described above, the controllers 26 may be coupled to linking devices 46 and 48 through an I/O NET 50. The linking devices 46 and 48 may communicate with the controllers 26 over the I/O NET 50. The linking devices 46 and 48 may be coupled to the H1 network 52, and one linking device 46 may be coupled to devices 38 and 44 and another linking device 48 may be coupled to device 40 and 42. The linking device 46 may include a memory 92, such as volatile and non-volatile memory, and a processor 94, and the linking device 48 may include a memory 96, such as volatile and non-volatile memory, and a processor 98. In one embodiment, the linking devices 46 and 48 may communicate with the controllers 26 using the Fieldbus Foundation protocol.

The system 10 may enable alert and diagnostic information to be communicated from the various devices to a user, such as through the HMI 14 and the alarm viewers 80. In an embodiment, the Fieldbus Foundation devices 38, 40, 42, and 44 may include a memory 97, such as volatile and non-volatile memory, that may be used to store parameter, alert, and diagnostic information about the device. More specifically, Fieldbus Foundation devices (e.g., devices 38, 40, 42, and 44) may include a plurality of blocks that may be stored in the memory 97 on each device to define the behavior of the device. The plurality of blocks may include resource blocks, transducer blocks, analog input blocks, mass flow blocks, functional blocks, and the like. Based upon the parameters defined in the various blocks of a device (e.g., stored in the memory 97 of device 38, 40, 42, or 44), the device may be configured to provide an alert to the controller 26 indicating that a parameter in a block of the device has exceeded a defined threshold value. The alert may be subsequently provided by the controller 26 to the alarm server 70, which may process the alert and may provide a corresponding alarm to the HMI 14, the alarm viewers 80, or any other computers coupled to the unit data highway 24 or plant data highway 22.

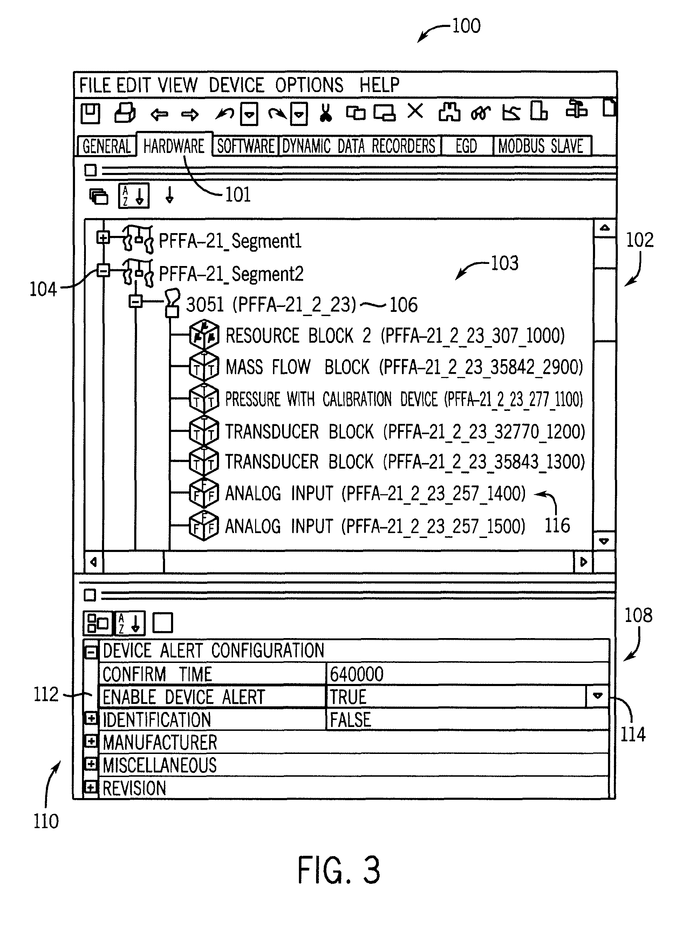

In general, within the Fieldbus Foundation protocol, alarms, events, and diagnostic information may be transferred in the form of a Fieldbus Foundation alert. A user interface (e.g., a graphical user interface), such as may be present on HMI 14, MES 16, DCS 18, or SCADA 20, may be used by an operator to enable and disable alerts for a Fieldbus Foundation device (e.g., devices 38, 40, 42, and 44). For example, FIG. 3 is an illustration of an embodiment of a user interface 100 that may provide such functionality. In the illustrated embodiment, the user interface 100 includes an upper navigation pane 102, with a "Hardware" tab 101 selected, which presents a hierarchical list 103 (e.g., a tree view) of the network. In certain embodiments, there may be multiple layouts (e.g., lists grouped by device type or device location) and organizational structures (e.g., block or flow diagrams, graphical charts, etc.) used to present the network topology and the various devices contained therein.

In the illustrated embodiment, a particular segment 104 of a linking device, namely "PFFA-21_Segment2", has been expanded to reveal an underlying Fieldbus Foundation device 106, namely "3051(PFFA-21_2_23)". In the upper navigation pane 102, the expanded Fieldbus Foundation device 106 of the hierarchical list 103 includes a plurality of blocks (e.g., a resource block, mass flow block, pressure with calibration device block, transducer blocks, and analog input blocks) that are defined for the device 106. The illustrated user interface 100 also includes a lower navigation pane 108 that may present settings for a particular Fieldbus Foundation device (e.g., device 106). That is, for example, when the operator selects device 106 from the upper pane 102, the lower navigation pane 108 may be populated with a list 110 containing a plurality of device parameters and actions that may be performed on the device 106.

Accordingly, as the device 106 has been selected in the upper navigation pane 102 of the illustrated embodiment, the parameters and actions included in the list 110 in the lower navigation pane 108 correspond to the selected device 106. In the illustrated embodiment, the list 110 includes an "Enable Device Alerts" option 112 for enabling or disabling alerts for the device. In the illustrated embodiment, the value for option 112 is set via a select box 114, which is populated with a "True" and a "False" option. In certain embodiments, alerts may be enabled or disabled using a checkbox, a radio button, or similar input mechanism. Accordingly, Fieldbus alerts may be managed at a device level with minimal operator input, allowing the operator to enable alerts for a device without having to understand and manually set the underlying Fieldbus Foundation parameters that actually enable alerts for the device.

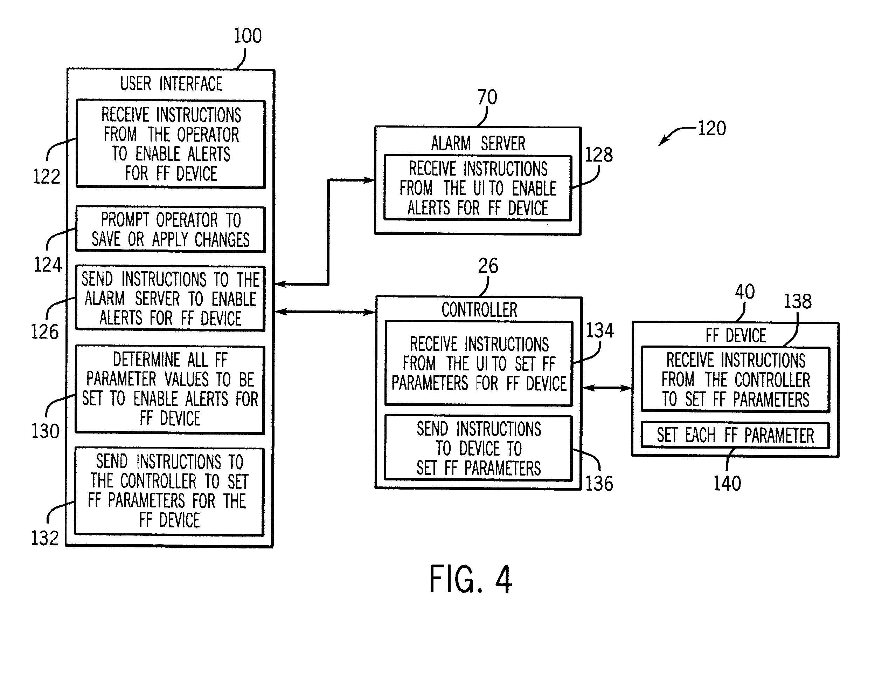

FIG. 4 illustrates an embodiment of a process 120 in which the user interface 100 is used by an operator to enable alerts for a Fieldbus Foundation device with minimal operator input. More specifically, FIG. 4 depicts aspects of the process 120 that may be implemented in the user interface 100, alarm server 70, controller 26, and the Fieldbus Foundation device 40 in order to enable alerts for the device. It should be noted that while FIGS. 4-5 and 7-8 present embodiments specifically involving device 40, although any of the Fieldbus Foundation devices (e.g., devices 38, 40, 42, 44, or 106) may serve as the Fieldbus Foundation device for the disclosed embodiments. In some embodiments, some or all of the aspects of the process 120 described below may be implemented as executable code instructions stored on non-transitory, tangible, computer-readable media, such as the memory of 72 of the alarm server 70, the memory 82 of the alarm viewer 80, the memory 86 of the controllers 26, and the memory 97 of the field device 40. Initially, the process 120 begins with the user interface 100 receiving (block 122) instructions from the operator to enable alerts for the device (e.g., device 40). For example, the operator may use the select box 114 illustrated in FIG. 3 to set the value of the "Enable Device Alerts" action to "True" for the Fieldbus device (e.g., device 40).

After receiving instructions from the operator to enable alerts for an identified device, the user interface 100 may prompt (block 124) the operator to save or apply changes to the system. Upon applying the changes, the user interface 100 may send (block 126) instructions to the alarm server 70 to enable the alerts for the Fieldbus Foundation device 40. In other embodiments, the information provided by the operator may be immediately sent to the alarm server 70 without applying or saving the changes. Regardless, the information sent to the alarm server 70 includes identifying information for the device (e.g., Device ID, Device Type, Device Revision, Device Definition File Revision Version, etc.) as well as instructions to enable alerts for the device. As illustrated in FIGS. 1 and 2, the information exchanged between the user interface 100 (e.g., running on HMI 14, MES 16, SCADA 20, etc.) and the alarm server 70 may occur over the plant data highway 22 or the unit data highway 24. Next, the alarm server 70 receives (block 128) instructions from the user interface 100 to enable alerts for a Fieldbus Foundation device 40, wherein the instructions include the identity of the device. For example, the alarm server 70 may receive instructions that the operator desires to enable alerts for Fieldbus Foundation device 40, and the instructions may include a Device ID, Device Type, and Device Revision, which may be used to uniquely identify the device 40 on the network. In an embodiment, the alarm server 70 may record the enabling of alerts for the Fieldbus Foundation device 40.

Next, the user interface. 100 determines (block 130) which underlying Fieldbus Foundation parameter values should be set in order to enable alerts for the identified device 40. That is, while the user interface 100 may receive only receive minimal information from the operator (e.g., device identity and that alerts are to be enabled), a plurality of underlying Fieldbus Foundation device parameters may also be set to effectively enable alerts for the device.

As such, in order to enable alerts for a Fieldbus Foundation device, several underlying device Fieldbus Foundation parameters related to the Fieldbus Foundation alert may be set. For example, the device 40 may have a resource block (e.g., stored in memory 97) that includes a reporting mode parameter, a multi-bit alarm parameter, a limit notify parameter, and a priority parameter. These underlying device parameters may be set by the user interface 100 (via controller 26) in order to enable alerts according to the operator selection. For example, to enable alerts on device 40, the reporting mode parameter may be set to active (e.g., true), the multi-bit alarm parameter may be set to active (e.g., true), the limit notify parameter may be set to a value greater than 0 (e.g., 20), and the priority parameter for the device 40 may be set to greater than 2. In some embodiments, the user interface 100 may include a list of values to be applied to the parameters of the device to enable alerts. For example, if the priority parameter of the alarm is to be greater than 2 for alerts to be enabled, the user interface 100may determine a value (e.g., 3) to set for the priority parameter based upon such a list.

Once the user interface 100 has determined the Fieldbus Foundation parameter values that are to be set on the device, the user interface 100 may send (block 132) instructions to the controller 26 to set the Fieldbus Foundation parameters on the Fieldbus Foundation device. In certain embodiments, the user interface 100 may send the instructions to the controller 26 in a single transmission. In other embodiments, the user interface 100 may instead send a series of individual instructions to the controller 26 (e.g., one instruction per parameter). As illustrated in FIGS. 1 and 2, the information exchanged between the user interface 100 and the controller 26 may occur over the plant data highway 22 or unit data highway 24.

Accordingly, the controller 26 may receive (block 134) instructions from the user interface 100 to set Fieldbus Foundation parameters for the Fieldbus Foundation device 40. The controller 26 may send (block 136) instructions to the device 40 to set the parameters based upon the instructions received from the user interface 100. In certain embodiments, the controller 26 may send the instructions in a single transmission, while in other embodiments the instructions may be sent to the device one by one. As illustrated in FIGS. 1 and 2, the Fieldbus Foundation device 40 may be located on an H1 network 52 segment that is coupled to the HSE Ethernet network 50 segment containing the controller 26 via linking devices 46 or 48. As such, the instructions sent by the controller 26 to the device (e.g., device 40) may traverse the HSE Ethernet network 50, a linking device 46 or 48, and the H1 network 52 before being received (block 138) by the device 40.

After receiving instructions from the controller 26, the Fieldbus Foundation device 40 may set (block 140) each Fieldbus Foundation parameter. In certain embodiments, the Fieldbus Foundation device 40 may send one or more confirmation messages back to the controller 26 to verify that all parameters have been set. Similarly, in certain embodiments, one or more confirmation messages may be exchanged between the controller 26 and user interface 100 and/or between the alarm server 70 and the user interface 100, to indicate that the appropriate parameters have been set to enable the alert. For example, based on confirmation information sent upstream to the user interface 100, the user interface 100 may present the operator with a confirmation message (e.g., in a pop-up box or notification area) indicating that alerts have been enabled, the underlying Fieldbus Foundation device parameters that have been set, and the value assigned to each parameter. Additionally, in certain embodiments, any errors encountered during the execution of the process 120 may also be exchanged between the device 40 and the controller 26, controller 26 and the user interface 100, and/or between the alarm server 70 and the user interface 100 in order for the user interface 100 to inform the operator that an error has occurred during the enablement of the alert for the device.

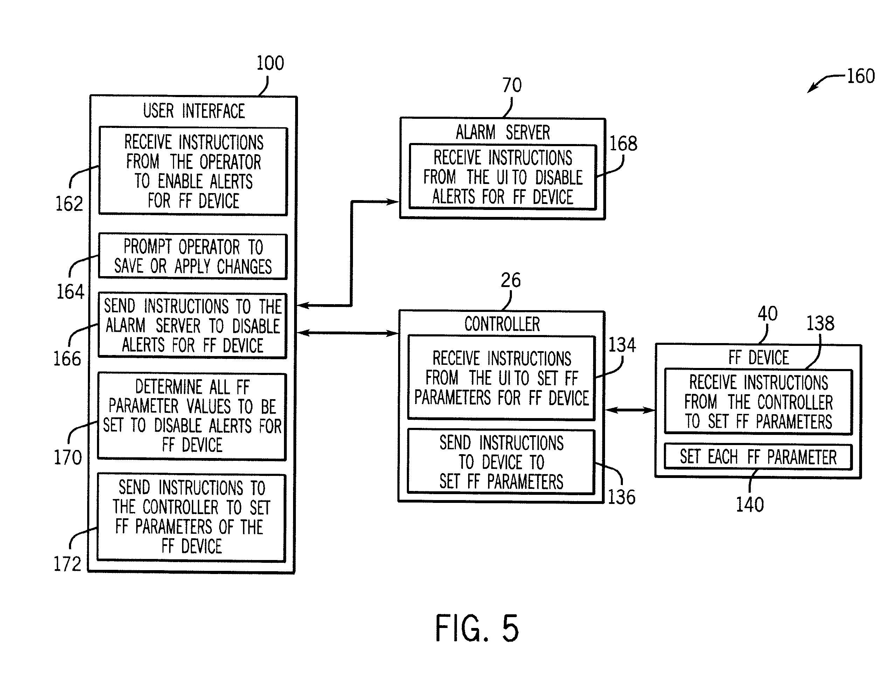

Similarly, FIG. 5 illustrates an embodiment of a process 160 in which the user interface 100 is used by an operator to disable alerts for a Fieldbus Foundation device (e.g., device 40). More specifically, FIG. 5 depicts aspects of the process 120 that may be implemented in the user interface 100, alarm server 70, controller 26, and the Fieldbus Foundation device 40 in order to disable alerts for the device. In some embodiments, some or all of the aspects of the process 160 described below may be implemented as executable code instructions stored on non-transitory, tangible, computer-readable media, such as the memory of 72 of the alarm server 70, the memory 82 of the alarm viewer 80, the memory 86 of the controllers 26, and the memory 97 of the field device 40. Initially, the process 160 begins with the user interface 100 receiving (block 162) instructions from the operator to disable alerts for a device (e.g., device 40). For example, the operator may use the select box 114 illustrated in FIG. 3 to set the value of the "Enable Device Alerts" action to "False" for the Fieldbus device (e.g., device 40).

After receiving instructions from the operator to disable alerts for an identified device (e.g., device 40), the user interface 100 may prompt (block 164) the operator to save or apply changes to the system. Upon applying the changes, the user interface 100 may send (block 166) instructions to the alarm server to disable the alerts for the Fieldbus Foundation device 40. In certain embodiments, the information provided by the operator may be immediately sent to the alarm server 70 without a separate applying or saving changes step. Regardless, the information sent to the alarm server 70 includes identifying information for the device (e.g., Device ID, Device Type, Device Revision, Device Definition File Revision Version, etc.) as well as instructions to disable alerts for the device. As illustrated in FIGS. 1 and 2, the information exchanged between the user interface 100 (e.g., running on HMI 14, MES 16, SCADA 20, etc.) and the alarm server 70 may occur over the plant data highway 22 or the unit data highway 24.

Next, the alarm server 70 receives (block 168) instructions from the user interface 100 to disable alerts for a Fieldbus Foundation device (e.g., device 38, 40, 42, 44, or 106). The instructions may include the identity of the device for which alerts are to be disabled. For example, the alarm server 70 may receive instructions that the operator desires to disable alerts for Fieldbus Foundation device 40, and the instructions may include a Device ID, Device Type, and Device Revision, which may be used to uniquely identify the device 40 on the network. In an embodiment, the alarm server 70 may record the disabling of alerts for the Fieldbus Foundation device 40.

Next, the user interface 100 determines (block 170) which underlying Fieldbus Foundation parameter values should be set in order to disable alerts for the identified device. That is, while the user interface 100 may receive only receive minimal information from the operator (e.g., device identity and that alerts are to be disabled), a plurality of underlying Fieldbus Foundation device parameters may also be set to effectively disable alerts for the device.

As such, in order to disable alerts for a Fieldbus Foundation device (e.g., device 40), several underlying device Fieldbus Foundation parameters related to the Fieldbus Foundation alert may be set. For example, the device 40 may have a resource block (e.g., stored in memory 97) that includes a reporting mode parameter, a multi-bit alarm parameter, a limit notify parameter, and a priority parameter. These underlying device parameters may be set by the user interface 100 (e.g., via controller 26) in order to disable alerts according to the operator selection. For example, to disable alerts on device 40, the reporting mode parameter may be set to false (e.g., 0), the multi-bit alarm parameter may be set to false (e.g., 0), the limit notify parameter may be set to a value of 0, and the priority parameter for the device 40 may be set to a value less than 2. In some embodiments, the user interface 100 may utilize a list of values to be applied to the parameters of the device 40 when disabling alarms. For example, if the priority parameter is to be less than 2 for alerts to be disabled, the user interface 100 may determine a value (e.g., 0) to set for the priority parameter based on such a list.

Once the user interface 100 has determined the Fieldbus Foundation parameters values that are to be set on the device, the user interface 100 may send (block 172) instructions to the controller 26 to set the Fieldbus Foundation parameters on the Fieldbus Foundation device 40. In certain embodiments, the user interface 100 may send the instructions to the controller 26 in a single transmission. In other embodiments, the user interface 100 may instead send a series of individual instructions to the controller 26 (e.g., one instruction per parameter). As illustrated in FIGS. 1 and 2, the information exchanged between the user interface 100 and the controller 26 may occur over the plant data highway 22 or unit data highway 24.

The remainder of the process 160 (blocks 134 - 140) that describe setting of the Fieldbus Foundation parameters on the device by the controller 26 may occur in a manner similar to that described above with regard to FIG. 4. Additionally, in certain embodiments, one or more confirmation messages may be exchanged between the controller 26 and user interface 100, and/or between the alarm server 70 and the user interface 100, to indicate that the appropriate parameters have been set to disable alerts for the device 40. For example, based upon confirmation information fed back upstream, the user interface 100 may present the operator with a confirmation message (e.g., in a pop-up box or notification area) indicating that alerts have been disabled, the underlying Fieldbus Foundation device parameters that have been set, and the value assigned to each. Additionally, in certain embodiments, any errors encountered during the execution of the process 160 may also be exchanged between the device (e.g., device 40) and the controller 26, controller 26 and the user interface 100, and/or between the alarm server 70 and the user interface 100 in order for the user interface 100 to inform the operator that an error has occurred during the enabling of the alarm for the device.

After alerts have generally been enabled for a Fieldbus Foundation device (e.g., device 40), in certain embodiments the operator may also desire to enable and disable individual alerts for particular blocks of the device. That is, once alerts have been generally enabled for a device using the process described in FIG. 4, an operator may individually enable and disable specific alerts for blocks of the device. For example, turning once more to the embodiment of FIG. 3, once the device 106 has been selected in the upper navigation pane 102, and once the "Enable Device Alerts" option 112 has been set to "True" using the select box 114, the operator may select a particular block (e.g., analog input block 116, namely "PFFA-21_2_23_257_1400") from the upper navigation pane 102.

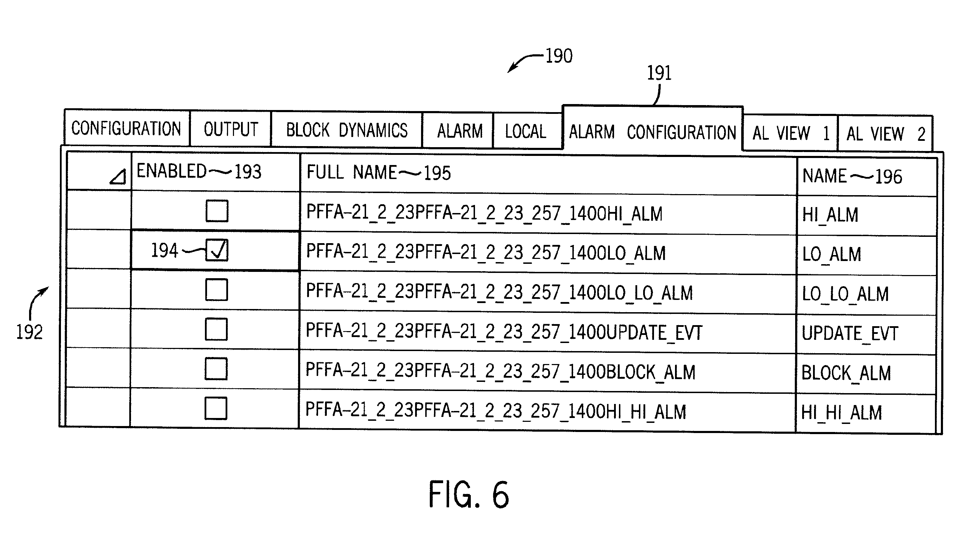

Upon selecting a particular block, such as analog input block 116, a navigation pane of the user interface 100 may present the operator with a screen, such as the embodiment of the screen illustrated in FIG. 6. As shown in the figure, the screen may include a navigation pane 190 having various tabs selectable by a user. For example, when the navigation pane 190 has the "Alarm Configuration" tab 191 selected for a device block (e.g., analog input block 116) of a device (e.g., device 106) having alerts enabled, the navigation pane 190 displays a list of alerts 192 that may be enabled or disabled for the analog input block 116 of the Fieldbus Foundation device 106. The list of alerts 192 may include a low limit alarm alert (e.g., "LO_ALM"), a high limit alarm alert (e.g., "HI_ALM"), a critical low limit alarm alert (e.g., "LO_LO_ALM"), a critical high limit alarm alert (e.g., "HI_HI_ALM"), deviation low alarm alert (e.g., "DV_LO_ALM"), a deviation high alarm alert (e.g., "DV_LO_ALM"), a discrete alarm alert (e.g., "DISC_ALM"), a block alarm alert (e.g., "BLOCK_ALM"), or a custom alarm alert. In general, the high and low deviation alarm alerts signal when a monitored channel analog value of the device deviates by at least a defined deviation threshold value. In general, the discrete alert signals when a monitored channel discrete value for a device exceeds a defined threshold value. In general, block alarm alert and custom alarm alerts may be defined within device blocks to signal errors encountered, for example, when executing a set of instructions in the block.

Each alert in the list of alerts 192 may include a plurality of alert parameters, including an "Enabled" parameter 193 selectable by a checkbox 194, a "Full Name" parameter 195 containing the full name of the alert, and an abbreviated "Name" parameter 196. In certain embodiments, the list of alerts 192 may be horizontally scrolled to reveal additional alert parameters that may be set by the operator. Using the checkboxes 194 in the "Enabled" parameter 193 column (e.g., checkbox 194), the operator may enable specific alerts for the selected device block without having to set each and every underlying Fieldbus Foundation parameter for the alert. For example, by checking the checkbox 194, the "LO_ALM" for Fieldbus Foundation device 106 may be enabled.

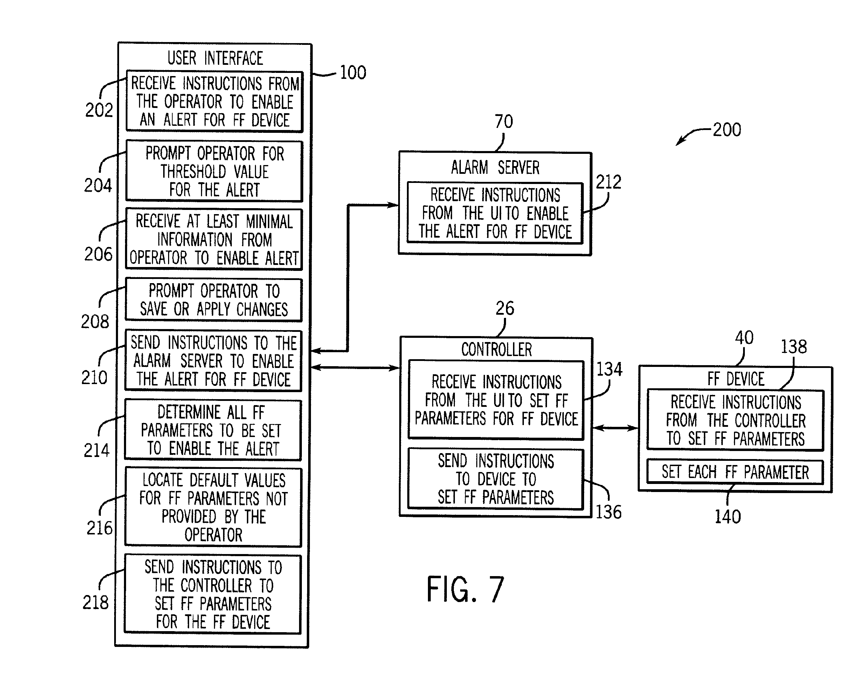

FIG. 7 illustrates an embodiment of a process 200 in which a user interface 100 is used by an operator to enable an alert for a Fieldbus Foundation device. More specifically, FIG. 7 depicts aspects of the process 200 that may be implemented in the user interface 100, alarm server 70, controller 26, and the Fieldbus Foundation device 40 in order to enable an alert for the device. In some embodiments, some or all of the aspects of the process 200 described below may be implemented as executable code instructions stored on non-transitory, tangible, computer-readable media, such as the memory of 72 of the alarm server 70, the memory 82 of the alarm viewer 80, the memory 86 of the controllers 26, and the memory 97 of the device 40.

Initially, the process 200 begins with the user interface 100 receiving (block 202) instructions from the operator to enable an alert for a Fieldbus Foundation device. For example, as illustrated in FIG. 6, the operator may check the checkbox 194 to enable the low limit alarm alert (e.g., "LO_ALM") for the analog input block 116 (e.g., "PFFA-21_2_23_257_1400") for Fieldbus Foundation device 106 (e.g., "PFFA-21_2_23"). In certain embodiments, an alert may be enabled or disabled using a checkbox, a radio button, a select box, or the like.

Upon receipt of the operator's selection to enable an alert for the Fieldbus Foundation device, the operator may be prompted (block 204) by a data entry mechanism (e.g., a pop-up box) to enter at least a minimal amount of information needed to enable the alert. For example, if the operator enables a high limit alarm alert (e.g., "HI_ALM") for the analog input block for pressure of device 40, the operator may be subsequently prompted by a pop-up box to enter a value (e.g., a set-point or threshold value), such that the alert will activate when the value is exceeded. That is, when the pressure for device 40 exceeds the set-point or threshold value (e.g., 1000 psi), an alert for the analog input block of device 40 may be triggered. In certain embodiments, the operator may be prompted to provide the set-point or threshold value using a separate navigation pane, or in a separate portion of the navigation pane 190 illustrated in FIG. 6.

The user interface 100 may receive (block 206) at least a minimal amount of information from the operator to enable the alert (e.g., a device and/or alert identity, and a threshold value) but may receive additional information to set additional parameters of the alert as well. For example, in addition to a threshold value, the operator may desire to set a particular alert priority for the alert. In certain embodiments, when the operator is presented with the navigation pane 190 of FIG. 6, the operator may be able to scroll horizontally (e.g., left/right) to find additional parameters for the alert that may be set by the operator using various input mechanisms (e.g., select boxes, check boxes, radio buttons, text boxes, etc.). Accordingly, the user interface 100 may receive information from the operator to set particular device and alert parameters when enabling the alert.

After collecting information from the operator regarding the alert (e.g., a device and/or alarm identity, a threshold value, and any additional parameters set by the operator), the user interface 100 may prompt (block 208) the operator to save or apply changes to the system. Upon applying the changes, the user interface 100 may send (block 210) instructions to the alarm server 70 to enable the alert for the Fieldbus Foundation device 40. In other embodiments, the information provided by the operator may be immediately sent to the alarm server 70 without applying or saving the changes. Regardless, the information sent to the alarm server 70 may include the identifying information about the device (e.g., Device ID, Device Type, Device Revision, etc.) and/or the alert (e.g., an Alert or Alarm ID number), the threshold value, and any additional device parameters provided by the operator. As illustrated in FIGS. 1 and 2, the information exchanged between the user interface 100 (e.g., running on HMI 14, MES 16, SCADA 20, etc.) and the alarm server 70 may occur over the plant data highway 22 or the unit data highway 24.

Next, the alarm server 70 receives (block 212) instructions from the user interface 100 to enable the alert for the device 40. The instructions may include at least the minimal information to enable the alarm (e.g., device and/or alert identity, and the threshold value). For example, the alarm server 70 may receive instructions that the operator desires to enable a low limit alarm alert (e.g., "LO_ALM") for Fieldbus Foundation device 40 and to trigger an alert when the pressure drops below a threshold value of 100 psi. In an embodiment, the alarm server 70 may record the enabling of the alert for the Fieldbus Foundation device 40.

Next, the user interface 100 determines (block 214) which underlying Fieldbus Foundation parameters should be set in order to enable the requested alert. That is, while the user interface may receive minimal information from the operator regarding the alert (e.g., device and/or identity, and the threshold value), a plurality of underlying Fieldbus Foundation device parameters may also be set to effectively enable the alarm for the device 40.

As such, in order to enable, for example, a low limit pressure alarm alert (e.g., "LO_ALM") for the Fieldbus Foundation device 40, several underlying device parameters related to the Fieldbus Foundation alert may be set. For example, the device 40 may have an analog input block (e.g., block 116 stored in memory 97) that includes a priority parameter and an alarm summary parameter for the low limit pressure alarm alert. These underlying alert parameters may be set by the user interface 100 in order to enable the alert for the block of device 40 according to the operator selection. For example, to enable an alert on such a device 40, the priority parameter of the low limit pressure alarm alert may be set to greater than 2 and the alarm summary parameter may be set to true (e.g., 1). Furthermore, in certain embodiments, the priority and alarm summary parameters may include a "disabled" sub-parameter. In such embodiments, in addition to the values assigned to the priority and alarm summary parameters, the "disabled" sub-parameter for each parameter may also be set to false (e.g., 0) to enable the alert for the block of the device.

In some embodiments, the user interface 100 may include a list in which default values may be located (block 216) to be applied to the parameters of device 40 that are not explicitly provided by the operator when enabling an alert (e.g., in step 206). For example, if the priority parameter of the alert is to be greater than 2 for an indicated alert to be enabled, and no value for the priority parameter is explicitly provided by the operator (e.g., in block 206), the user interface 100 may locate a default value (e.g., 3) for the priority parameter from the list of default values and apply this default value to the priority parameter of the device 40 for the alert.

Once the user interface 100 has determined the Fieldbus Foundation parameters that are to be set on the device 40 and combined the information supplied by the operator with default values for parameters not supplied by the operator, the user interface 100 may send (block 218) instructions to the controller 26 to set the Fieldbus Foundation parameters on the Fieldbus Foundation device 40. In certain embodiments, the user interface 100 may send the instructions to the controller 26 in a single transmission. In other embodiments, the user interface 100 may instead send a series of individual instructions to the controller 26 (e.g., one instruction per parameter). As illustrated in FIGS. 1 and 2, the information exchanged between the user interface 100 and the controller 26 may occur over the plant data highway 22 or unit data highway 24.

The remainder of the steps in the process 200 (blocks 134 - 140) that involve the setting of the Fieldbus Foundation parameters on the device by the controller 26 may occur in a similar manner to that described above with regard to FIG. 4. In certain embodiments, the Fieldbus Foundation device 40 may send one or more confirmation messages back to the controller 26 to verify that all parameters have been set. Similarly, in certain embodiments, one or more confirmation messages may be exchanged between the controller 26 and the user interface 100, and/or between the alarm server 70 and the user interface 100, to indicate that the appropriate parameters have been set to enable the alert. For example, based upon confirmation information fed back upstream, the user interface 100 may present the operator with a confirmation message (e.g., in a pop-up box or notification area) indicating that the alert has been enabled, the underlying Fieldbus Foundation device parameters that have been set, and the value assigned to each. Additionally, in certain embodiments, any errors encountered during the execution of the process 200 may also be exchanged between the device 40 and the controller 26, controller 26 and the user interface 100, and/or between the alarm server 70 and the user interface 100 in order for the user interface 100 to inform the operator that an error has occurred during the enabling of the alert for the device.

Similarly, the process of disabling an alert for a particular block of a field device may also be managed with minimal input from the operator. As previously described, once alerts have been generally enabled for a device using the process described in FIG. 4, an operator may individually disable specific alerts for the device. For example, turning once more to the embodiment of FIG. 3, once the device 106 has been selected in the upper navigation pane 102, and once the "Enable Device Alerts" option 112 has been set to "True" using the select box 114, the operator may select a particular block (e.g., analog input block 116, namely "PFFA-21_2_23_257_1400") from the upper navigation pane 102. Upon selecting a particular block, such as analog input block 116, a navigation pane of the user interface 100 may present the operator with a screen similar to the embodiment illustrated in FIG. 6. For example, as illustrated, when the navigation pane 190 has the "Alarm Configuration" tab 191 selected for a device block (e.g., analog input block 116) of a device (e.g., device 106) with alerts enabled, the navigation pane 190 includes a list of alerts 192 that may be disabled for the analog input block 116 of the Fieldbus Foundation device 106.

As described above, the list of alerts 192 may include a low limit alarm alert (e.g., "LO_ALM"), a high limit alarm alert (e.g., "HI_ALM"), a critical low limit alarm alert (e.g., "LO_LO_ALM"), a critical high limit alarm alert (e.g., "HI_HI_ALM"), a deviation low alarm alert (e.g., "DV_LO_ALM"), a deviation high alarm alert (e.g., "DV_LO_ALM"), a discrete alarm alert (e.g., "DISC_ALM"), a block alarm alert (e.g., "BLOCK_ALM"), or a custom alarm alert. Each alert in the list of alerts 192 may include a plurality of alert parameters, including an "Enabled" parameter 193 selectable by a checkbox 194, a "Full Name" parameter 195 containing the full name of the alert, and an abbreviated "Name" parameter 196. Using the checkbox, the operator may enable and disable specific alarms for the selected device block without having to set each and every underlying Fieldbus Foundation parameter for the alarm. For example, by unchecking (e.g., deselecting) the checkbox 194, the low limit alarm alert (e.g., "LO_ALM") for the analog input block 116 of Fieldbus Foundation device 106 may be disabled.

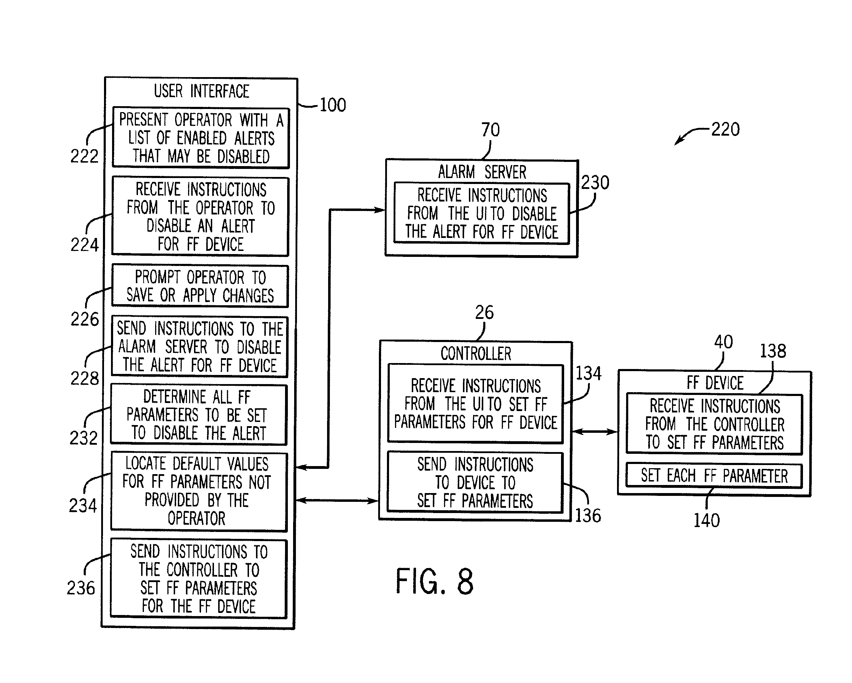

FIG. 8 illustrates an embodiment of a process 220 in which a user interface 100 is used by an operator to disable an alert for a Fieldbus Foundation device. More specifically, FIG. 8 depicts aspects of the process 220 that may be performed by the user interface 100, alarm server 70, controller 26, and a Fieldbus Foundation device 40 in order to disable an alert for the device. In some embodiments, some or all the aspects of the process 220 described below may be implemented as executable code instructions stored on non-transitory, tangible, computer-readable media, such as the memory of 72 of the alarm server 70, the memory 82 of the alarm viewer 80, the memory 86 of the controllers 26, and the memory 97 of the device 40.

In certain embodiments, the process 220 may initially begin with the user interface 100 presenting an operator (block 222) with a list containing representations of enabled alerts that may be disabled for a particular Fieldbus Foundation device (e.g., device 40). For example, the operator may be presented with a screen similar to FIG. 6, and the list of alerts 192 may include an enabled low limit alarm alert, "LO_ALM". Next, the user interface 100 may receive (block 224) instructions from the operator to disable an alarm for the Fieldbus Foundation device 40. For example, the operator may uncheck (e.g., deselect) the checkbox 194 and thereby instruct the user interface 100 that the low limit alarm alert (e.g., "LO_ALM") for the analog input block 116 of Fieldbus Foundation device 106 is to be disabled.

In certain implementations, after selecting an alert to disable, the user interface 100 may prompt (block 226) the operator to save or apply changes to the system. Upon applying the changes, the user interface 100 may send (block 228) instructions to the alarm server to disable the alert for the Fieldbus Foundation device 40. In certain embodiments, the information provided by the operator may be immediately sent to the alarm server 70 without a separate applying or saving changes step. Regardless, the information sent to the alarm server 70 may include the identifying information for the device (e.g., Device ID, Device Type, Device Revision, Device Definition File Revision Version, etc.) and/or alert (e.g., Alert or Alarm ID Number) to be disabled. As illustrated in FIGS. 1 and 2, the information exchanged between the user interface 100 (e.g., running on HMI 14, MES 16, SCADA 20, etc.) and the alarm server 70 may occur over the plant data highway 22 or the unit data highway 24. The alarm server 70 receives (block 230) instructions from the user interface 100 to disable the alarm for the Fieldbus Foundation device. For example, the alarm server 70 may receive instructions to disable a low limit alarm alert (e.g., "LO_ALM") for an analog input block 116 of Fieldbus Foundation device 40. In an embodiment, the alarm server 70 may record the disabling of the alert for the Fieldbus Foundation device 40.

Next, the user interface 100 determines (block 232) which underlying Fieldbus Foundation parameters should be set in order to disable the specified alarm. That is, other underlying Fieldbus Foundation device parameters (e.g., Fieldbus Foundation alert parameters) may also be adjusted to actually disable the alert for the device 40. In order to disable, for example, a low limit alarm alert for the Fieldbus Foundation device 40, a plurality of underlying device parameters related to the Fieldbus Foundation alert may need to be set. For example, the analog input block 116 of device 40 (e.g., stored in memory 97) may include a priority parameter and an alarm summary parameter of the low limit alarm alert. These underlying device parameters may be set by the user interface 100 (e.g., via controller 26) in order to disable the alert according to the operator selection. For example, to disable the low limit alarm alert on device 40, the priority parameter may be set to a value less than 2 and the alarm summary parameter may be set to false (e.g., 0). Additionally, in certain embodiments, the priority and alarm summary parameters may include a "disabled" sub-parameter. In such embodiments, in addition to setting the values of the priority and alarm summary parameters, the values of the "disabled" sub-parameter for both parameters may be set to true (e.g., 1) to disable the alert for the device.

In some embodiments, the user interface 100 may utilize a default value list to locate (block 234) default values to apply to certain parameters of the device 40 when disabling the alert. For example, if the priority parameter of the alert is to be less than 2 for the alert to be disabled, the user interface 100 may locate a default value (e.g., 0) for the priority parameter from the list of default values and apply this value to the priority parameter for the alert.

Once the user interface 100 has determined the Fieldbus Foundation parameters that are to be set on the Fieldbus Foundation device to disable the alert, the user interface 100 may send (block 236) instructions to the controller 26 to set the parameters on the Fieldbus Foundation device 40. In certain embodiments, the user interface 100 may send the instructions to the controller 26 in a single transmission. In other embodiments, the user interface 100 may instead send a series of individual instructions to the controller 26 (e.g., one instruction per parameter). As illustrated in FIGS. 1 and 2, the information exchanged between the user interface 100 and the controller 26 may occur over the plant data highway 22 or unit data highway 24.

The remainder of the steps in the process 220 (blocks 134 - 140) that involve setting of the Fieldbus Foundation parameters on the device by the controller 26 may occur in a similar manner to that described above with regard to FIG. 4. In certain embodiments, the Fieldbus Foundation device 40 may send one or more confirmation messages back to the controller 26 to verify that all parameters have been set. Similarly, in certain embodiments, one or more confirmation messages may be exchanged between the controller 26 and the user interface 100, and/or between the alarm server 70 and the user interface 100, to indicate that the appropriate parameters have been set to disable the alert. For example, based on confirmation information sent upstream to the user interface 100, the user interface 100 may present the operator with a confirmation message (e.g., in a pop-up box or notification area) indicating that the alert has been disabled, the underlying Fieldbus Foundation device parameters that have been set, and the value assigned to each. Additionally, in certain embodiments, any errors encountered during the execution of the process 220 may also be exchanged between the device 40 and the controller 26, controller 26 and the user interface 100, and/or between the alarm server 70 and the user interface 100 in order for the user interface 100 to inform the operator that an error has occurred during the disabling of the alert for the device.

Technical effects of this disclosure include allowing the operator to enable and disable alerts for Fieldbus Foundation devices without having intimate knowledge of the underlying Fieldbus Foundation parameters that should be set to enable and disable alerts. Previous solutions required that the operator manually set the value of several Fieldbus Foundation parameters in order to manage alerts for Fieldbus Foundation devices. In contrast, the disclosed embodiments allow the operator to focus on managing the device alarms at a higher level and allow the user interface and the alarm server to seamlessly manage the low-level Fieldbus Foundation parameters. Additionally, the disclosed embodiments provide a simple user interface having clear information presentation and intuitive data entry mechanisms, which enable an operator to quickly identify and configure device alerts. Furthermore, by managing the low-level Fieldbus Foundation parameters for the operator, the disclosed embodiments help to prevent operator errors in which the operator may forget to set or reset one of several underlying Fieldbus Foundation parameters when enabling or disabling alerts.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial process control system (10), comprising:
a field device (38, 44, 40, 42, 106) comprising a first plurality of parameters;
a user interface (100) configured to provide for selection of the field device (38, 44, 40, 42, 106) and selection of an alert representation of the field device (38, 44, 40, 42, 106) to enable an alert of the field device (38, 44, 40, 42, 106); and
a controller (26) configured to set the first plurality of parameters of the field device (38, 44, 40, 42, 106) to a respective first plurality of values to enable the alert based on the selection of the alert representation in the user interface (100).

2. The system (10) of claim 1, wherein the field device (38, 44, 40, 42, 106) comprises a Fieldbus Foundation device, a HART field device, a Profibus field device, or a combination thereof.

3. The system (10) of claim 1 or claim 2, wherein the user interface (100) is configured to receive the selection of the field device (38, 44, 40, 42, 106) and the selection of the alert representation and to provide instructions to the controller (26) to set the first plurality of parameters in the field device (38, 44, 40, 42, 106) to the respective first plurality of values based on the selection of the alert representation in the user interface (100).

4. The system (10) of claim 1, 2 or 3, wherein the user interface (100) is configured to provide for selection of a second plurality of parameters of the field device (38, 44, 40, 42, 106), wherein the second plurality of parameters comprises a set-point parameter, a reporting mode parameter, a multi-bit alarm parameter, a limit notify parameter, and a priority parameter.

5. The system (10) of claim 4, wherein the user interface (100) is configured to determine default values for the first plurality of values based on the second plurality of parameters selected in the user interface (100).

6. The system (10) of any one of claims 1 to 5, wherein the field device (38, 44, 40, 42, 106) comprises a plurality of blocks, wherein the plurality of blocks comprise a resource block, a mass flow block, a transducer block, an analog input block, or a function block, wherein the selection of the field device (38, 44, 40, 42, 106) comprises selection of one of the plurality of blocks of the field device (38, 44, 40, 42, 106), and wherein the controller (26) is preferably configured to set the first plurality of parameters of the selected one of the plurality of blocks of the field device (38, 44, 40, 42, 106) to the respective first plurality of values to enable the alert.

7. A method comprising:
receiving (122, 162, 202, 222), from a user interface (100) of a computer, a selection of a field device (38, 44, 40, 42, 106) and a selection of an alert representation to enable or disable an alert of the field device (38, 44, 40, 42, 106);
determining (130, 170, 214, 232) a first plurality of parameters of the field device (38, 44, 40, 42, 106) to be set to enable or disable the alert; and
instructing (132, 172, 218, 236) a controller (26) to assign to the field device (38, 44, 40, 42, 106) a first plurality of values to the first plurality of parameters to enable or disable the alert.

8. A method comprising:
receiving (122, 162, 202, 222), from a user interface (100) of a computer, a selection of a field device (38, 44, 40, 42, 106) and instructions to enable or disable a plurality of alerts for the field device;
determining (130, 170, 214, 232) a first plurality of parameters of the field device (38, 44, 40, 42, 106) to be set to enable or disable the plurality of alerts; and
instructing (132, 172, 218, 236) a controller (26) to assign to the field device (38, 44, 40, 42, 106) a first plurality of values to the first plurality of parameters to enable or disable the plurality of alerts.

9. The method of claim 7 or claim 8, wherein the field device (38, 44, 40, 42, 106) comprises a Fieldbus Foundation device, a HART field device, a Profibus field device, or a combination thereof.

10. The method of claim 7, 8 or 9, wherein the field device (38, 44, 40, 42, 106) comprises a plurality of blocks, wherein the plurality of blocks comprise a resource block, a mass flow block, a transducer block, an analog input block, or a function block, wherein the selection of the field device (38, 44, 40, 42, 106) comprises selection of one of the plurality of blocks of the field device (38, 44, 40, 42, 106).

11. The method of claim 10, wherein the first plurality of parameters of the field device (38, 44, 40, 42, 106) comprises parameters of the selected one of the plurality of blocks of the field device (38, 44, 40, 42, 106).

12. The method of any one of claims 7 to 11, comprising receiving (206) from he user interface (100) a second plurality of values for a second plurality of parameters of the field device (38, 44, 40, 42, 106).

13. The method of claim 12, wherein the second plurality of parameters comprises a threshold parameter and the second plurality of values comprises a threshold value.

14. The method of claim 12 or claim 13, comprising determining (216, 234) default values for the first plurality of parameters based on the second plurality of parameters.

15. The method of any one of claims 1 to 14, comprising providing a confirmation message from the field device (38, 44, 40, 42, 106) to the user interface (100) of a computer.
